(19) Europäisches Patentamt
European Patent Office
Office européen des brevets

(11) Veröffentlichungsnummer: **0 590 438 A2**

# (12) EUROPÄISCHE PATENTANMELDUNG

(21) Anmeldenummer: **93114980.1**

(22) Anmeldetag: **17.09.93**

(51) Int. Cl.[5]: **C09B 67/22**, //C09B29/085

(30) Priorität: **29.09.92 DE 4232558**

(43) Veröffentlichungstag der Anmeldung:
**06.04.94 Patentblatt 94/14**

(84) Benannte Vertragsstaaten:
**CH DE FR GB IT LI PT**

(71) Anmelder: **BASF Aktiengesellschaft**
**Carl-Bosch-Strasse 38**
**D-67063 Ludwigshafen(DE)**

(72) Erfinder: **Lange, Arno, Dr.**
**Oberes Gaistal 3b**
**D-6702 Bad Duerkheim(DE)**
Erfinder: **Bach, Volker, Dr.**
**Robert-Schuman-Strasse 8**
**D-6730 Neustadt(DE)**
Erfinder: **Grund, Clemens, Dr.**
**Lassallestrasse 2**
**D-6800 Mannheim 24(DE)**
Erfinder: **Reichelt, Helmut, Dr.**
**Johann-Gottlieb-Fichte-Strasse 56**
**D-6730 Neustadt(DE)**
Erfinder: **Richter, Paul, Dr.**
**Maler-Koester-Strasse 7**
**D-6701 Friedelsheim(DE)**

## (54) Mischungen von Azofarbstoffen für marineblaue bis schwarze Farbtöne.

(57) Farbstoffmischungen, enthaltend
a) einen Azofarbstoff der Formel I

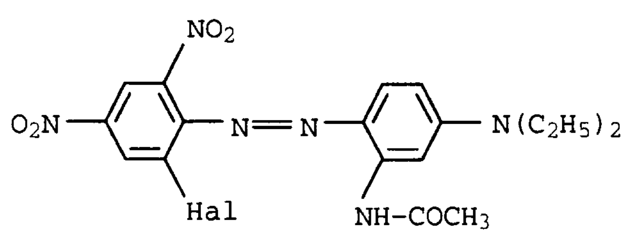

(I),

in der Hal Chlor oder Brom bedeutet,
b) den Azofarbstoff der Formel II

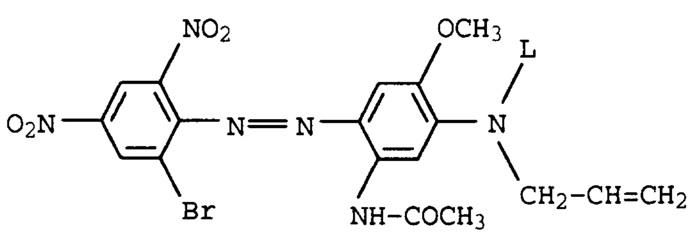

(II),

worin L für Allyl oder gegebenenfalls auch für Wasserstoff steht, sowie
c) einen Azofarbstoff der Formel III und/oder IV

EP 0 590 438 A2

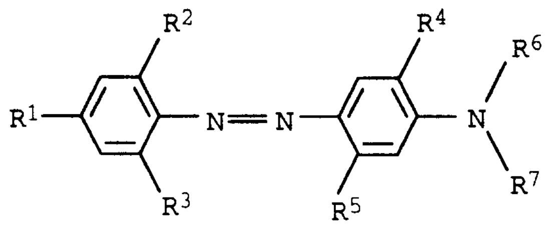

(III)

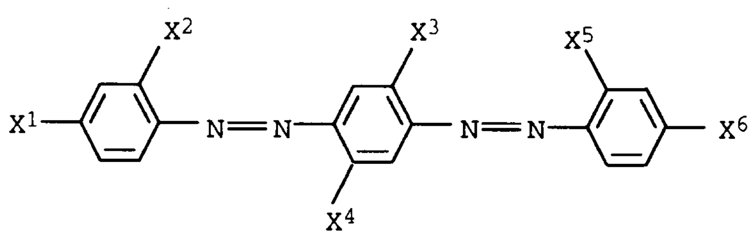

(IV)

worin

| | |
|---|---|
| $R^1$ | Nitro oder gegebenenfalls substituiertes $C_1$-$C_4$-Alkylsulfonyl, |
| $R^2$ und $R^3$ | Wasserstoff, Chlor oder Brom, |
| $R^4$ und $R^5$ | Wasserstoff oder Chlor, |
| $R^6$ und $R^7$ | Wasserstoff, Phenyl oder gegebenenfalls substituiertes $C_1$-$C_4$-Alkyl, |
| $X^1$ | Wasserstoff, Hydroxy, Methoxy, Acetylamino oder Nitro, |
| $X^2$, $X^3$, $X^4$ und $X^5$ | Wasserstoff, Methyl oder Methoxy und |
| $X^5$ | Hydroxy, 2-Hydroxyethoxy, Formyl oder Methoxycarbonylamino bedeuten, |

Farbstoffzubereitungen, enthaltend die neuen Farbstoffmischungen, sowie die Verwendung der neuen Farbstoffmischungen zum Färben oder Bedrucken von Polyestern in textiler Form.

Die vorliegende Erfindung betrifft neue Farbstoffmischungen, enthaltend, jeweils bezogen auf das Gesamtgewicht der Farbstoffe,

a) 25 bis 45 Gew.-% mindestens eines Azofarbstoffs der Formel I

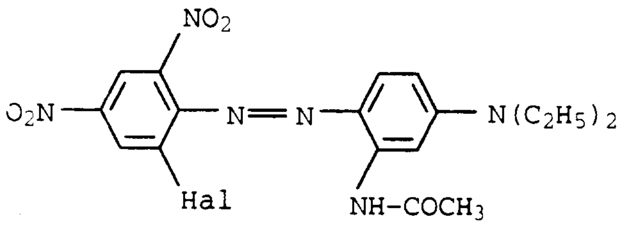

(I),

in der Hal Chlor oder Brom bedeutet,

b) 20 bis 70 Gew.-% des Azofarbstoffs der Formel IIa

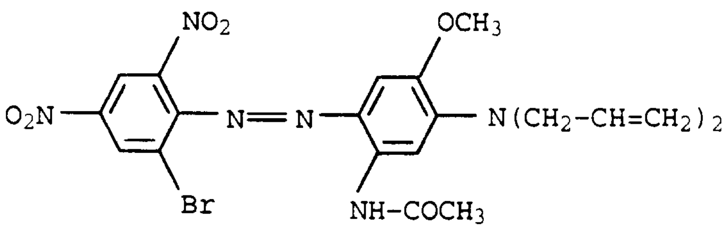

(IIa)

und gegebenenfalls des Farbstoffs oder Formel IIb

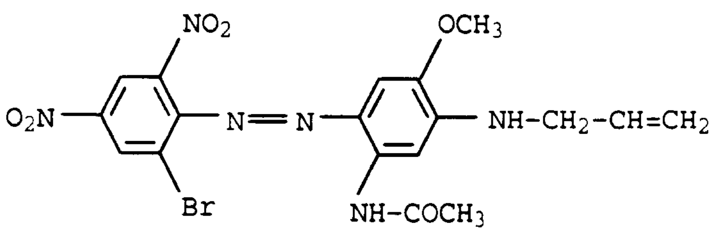

(IIb),

wobei der Anteil an Farbstoff IIa 50 bis 100 Gew.-% und an Farbstoff IIb 0 bis 50 Gew.-% beträgt, jeweils bezogen auf das Gewicht an Farbstoff IIa oder IIb,

sowie

c) 1 bis 55 Gew.-% mindestens eines Azofarbstoffs der Formel III oder IV

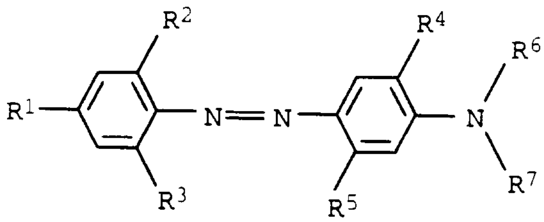

(III)

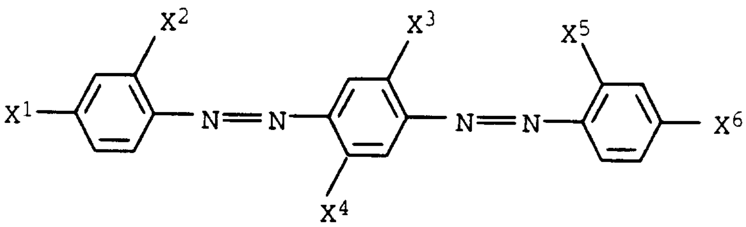

(IV),

worin

| | |
|---|---|
| $R^1$ | Nitro oder $C_1$-$C_4$-Alkylsulfonyl, das gegebenenfalls durch Hydroxy substituiert ist, |
| $R^2$ | Brom, |
| $R^3$ | Wasserstoff oder Brom oder $R^2$ und $R^3$ auch unabhängig voneinander jeweils Wasserstoff oder Chlor, |
| $R^4$ und $R^5$ | unabhängig voneinander jeweils Wasserstoff oder Chlor, |
| $R^6$ und $R^7$ | unabhängig voneinander jeweils Wasserstoff, Phenyl oder $C_1$-$C_4$-Alkyl, das gegebenenfalls durch Hydroxy, Phenoxy, 2-Cyanoethoxy, Acetyloxy, Phenoxyacetyloxy, Benzoyloxy, Methoxycarbonyloxy oder Phenylaminocarbonyloxy substituiert ist, oder, wenn $R^2$ und $R^3$ jeweils für Wasserstoff oder Chlor stehen, auch $C_1$-$C_4$-Cyanoalkyl, |
| $X^1$ | Wasserstoff, Hydroxy, Methoxy, Acetylamino oder Nitro, |
| $X^2$, $X^3$, $X^4$ und $X^5$ | unabhängig voneinander jeweils Wasserstoff, Methyl oder Methoxy und |
| $X^5$ | Hydroxy, 2-Hydroxyethoxy, Formyl oder Methoxycarbonylamino bedeuten, |

mit der Maßgabe, daß die Summe der unter a), b) und c) genannten Farbstoffe 100 Gew.-% ergibt, Farbstoffzubereitungen, enthaltend die neuen Farbstoffmischungen, sowie die Verwendung der neuen Farbstoffmischungen zum Färben oder Bedrucken von Polyestern in textiler Form.

Aus der JP-A-26060/1985 und der US-A-4 405 330 sind Farbstoffmischungen bekannt, die u.a. die Farbstoffe der obengenannten Formel I und IIa enthalten. Weiterhin beschreibt die DE-A-2 818 653 Farbstoffmischungen, die als Mischungspartner einen Farbstoff der Formel I aufweisen. Es hat sich jedoch gezeigt, daß diese Farbstoffmischungen bei ihrer Anwendung noch Mängel aufweisen.

Aufgabe der vorliegenden Erfindung war es nun, neue Farbstoffmischungen bereitzustellen, die ebenfalls die Farbstoffe der Formel I und IIa enthalten. Die neuen Mischungen sollten bei ihrer Anwendung marineblaue bis schwarze Farbtöne ergeben und sollten über gute anwendungstechnische Eigenschaften, insbesondere eine neutrale Abendfarbe, verfügen. Unter "neutraler Abendfarbe" versteht man, daß eine Färbung im Tageslicht und im Glühlampenlicht gleich aussieht. Farbmetrisch kann dieses Verhalten gemäß ISO 7724-3-1984 bestimmt werden.

Demgemäß wurden die eingangs näher bezeichneten Farbstoffmischungen gefunden.

Alle in den Formeln III und IV auftretenden Alkylgruppen können sowohl geradkettig als auch verzweigt sein.

Reste $R^1$ sind z.B. Methylsulfonyl, Ethylsulfonyl, Propylsulfonyl, Isopropylsulfonyl, Butylsulfonyl oder 2-Hydroxyethylsulfonyl.

Reste $R^6$ und $R^7$ sind z.B. Methyl, Ethyl, Propyl, Isopropyl, Butyl, Isobutyl, sec-Butyl, 2-Hydroxyethyl, 2- oder 3-Hydroxypropyl, 2- oder 4-Hydroxybutyl, 2-Phenoxyethyl, 2- oder 3-Phenoxypropyl, 2-(2-Cyanoethoxy)ethyl, 2-Acetyloxyethyl, 2-Phenoxyacetyloxyethyl, 2-Benzoyloxyethyl, 2-Methylcarbonyloxyethyl, 2-Phenylaminocarbonyloxyethyl oder 2-Cyanoethyl.

Bevorzugt sind Farbstoffmischungen, enthaltend mindestens einen Azofarbstoff der Formel III oder IV, worin

| | |
|---|---|
| $R^1$ | Nitro, |
| $R^2$ und $R^3$ | jeweils Wasserstoff oder jeweils Chlor, |
| $R^4$ | Wasserstoff, Chlor oder Methyl, |
| $R^5$ | Wasserstoff und |
| $R^6$ und $R^7$ | unabhängig voneinander Wasserstoff, Phenyl, $C_1$-$C_4$-Alkyl oder durch Hydroxy, Phenoxy, 2-Cyanoethoxy, Acetyloxy, Phenoxyacetyloxy, Benzoyloxy, Methoxycarbonyloxy, Phenylaminocarbonyloxy oder Cyano substituiertes Ethyl |

bedeuten und $X^1$, $X^2$, $X^3$, $X^4$, $X^5$ und $X^5$ jeweils die obengenannte Bedeutung besitzen.

Hervorzuheben sind Mischungen, enthaltend mindestens einen Azofarbstoff der Formel III oder IV, wobei diese Azofarbstoffe folgendes Substituentenmuster aufweisen.

Farbstoffe der Formel III:

| | $R^1$ | $R^2$ | $R^3$ | $R^4$ | $R^5$ | $R^6$ | $R^7$ |
|---|---|---|---|---|---|---|---|
| a) | $NO_2$ | H | H | H | H | H | H |
| b) | $NO_2$ | H | H | H | H | $CH_3$ | $NCC_2H_4$ |
| c) | $NO_2$ | H | H | H | H | $C_2H_5$ | $NCC_2H_4$ |
| d) | $NO_2$ | H | H | H | H | $C_4H_9$ | $NCC_2H_4$ |
| e) | $NO_2$ | H | H | H | H | $CH_3COOC_2H_4$ | $NCC_2H_4$ |
| f) | $NO_2$ | H | H | H | H | $C_6H_5$ | H |
| g) | $NO_2$ | H | H | $CH_3$ | H | $HOC_2H_4$ | H |
| h) | $NO_2$ | Cl | Cl | H | H | $CH_3$ | $HOC_2H_4$ |
| i) | $NO_2$ | Cl | Cl | H | H | $HOC_2H_4$ | $HOC_2H_4$ |
| j) | $NO_2$ | Cl | Cl | H | H | $HOC_2H_4$ | $C_2H_5$ |
| k) | $NO_2$ | Cl | Cl | H | H | $CH_3COOC_2H_4$ | $NCC_2H_4$ |
| l) | $NO_2$ | H | H | H | H | $C_6H_5NHCOOC_2H_4$ | $NCC_2H_4$ |
| m) | $NO_2$ | H | H | H | H | $C_6H_5OCH_2COOC_2H_4$ | $NCC_2H_4$ |
| n) | $NO_2$ | H | H | Cl | H | H | $HOC_2H_4OH$ |
| o) | $NO_2$ | H | H | Cl | H | $CH_3COOC_2H_4$ | $CH_3COOC_2H_4$ |
| p) | $NO_2$ | Cl | Cl | H | H | $HOC_2H_4$ | $NCC_2H_4$ |
| q) | $NO_2$ | Cl | Cl | H | H | $C_6H_5OCOC_2H_4$ | $NCC_2H_4$ |
| r) | $NO_2$ | H | H | H | H | $CH_3COOC_2H_4$ | $CH_3COOC_2H_4$ |

| | $R^1$ | $R^2$ | $R^3$ | $R^4$ | $R^5$ | $R^6$ | $R^7$ |
|---|---|---|---|---|---|---|---|
| s) | $NO_2$ | Cl | Cl | Cl | H | H | $NCC_2H_4$ |
| t) | $NO_2$ | Cl | Cl | H | H | $CH_3OCOOC_2H_4$ | $CH_3OCOOC_2H_4$ |
| u) | $NO_2$ | Cl | Cl | H | H | $CH_3COOC_2H_4$ | $CH_3COOC_2H_4$ |
| v) | $NO_2$ | H | H | H | H | $NCC_2H_4OC_2H_4$ | $NCC_2H_4$ |
| w) | $NO_2$ | H | H | H | H | $C_6H_5OCOC_2H_4$ | $NCC_2H_4$ |
| x) | $NO_2$ | Cl | Cl | Cl | H | $C_6H_5OC_2H_4$ | $NCC_2H_4$ |
| y) | $HOC_2H_4SO_2$ | Cl | Cl | H | Cl | $C_2H_5$ | $C_2H_5$ |

Farbstoffe der Formel IV:

| | $X^1$ | $X^2$ | $X^3$ | $X^4$ | $X^5$ | $X^6$ |
|---|---|---|---|---|---|---|
| a) | $NO_2$ | H | H | H | H | HO |
| b) | $NO_2$ | H | $CH_3O$ | H | H | HO |
| c) | $NO_2$ | H | $CH_3O$ | $CH_3$ | H | HO |
| d) | H | H | $CH_3O$ | $CH_3O$ | H | HO |
| e) | HO | H | $CH_3$ | H | H | CHO |
| f) | HO | H | $CH_3$ | $CH_3O$ | H | $HOC_2H_4O$ |
| g) | HO | $CH_3$ | H | H | $CH_3$ | HO |
| h) | H | H | $CH_3O$ | $CH_3$ | H | HO |
| i) | HO | H | $CH_3$ | H | H | $CH_3OCONH$ |
| j) | $CH_3O$ | H | H | $CH_3$ | H | HO |

| | $X^1$ | $X^2$ | $X^3$ | $X^4$ | $X^5$ | $X^6$ |
|---|---|---|---|---|---|---|
| k) | $CH_3OCONH$ | H | H | $CH_3$ | H | HO |
| l) | $NO_2$ | H | $CH_3$ | $CH_3$ | H | $OC_2H_4O$ |

Besonders hervorzuheben sind Mischungen, enthaltend mindestens einen Azofarbstoff der Formel IIId, IIIk oder IVb.

Vorteilhafte Farbstoffmischungen sind solche, die 70 bis 90 Gew.-% des Farbstoffs der Formel IIa und 10 bis 30 Gew.-% des Farbstoffs der Formel IIb, jeweils bezogen auf das Gewicht an Farbstoff IIa und IIb, aufweisen.

Die neuen Farbstoffmischungen enthalten, jeweils bezogen auf das Gesamtgewicht der Farbstoffe, a) 25 bis 45 Gew.-%, vorzugsweise 27 bis 40 Gew.-%, mindestens eines Azofarbstoffs der Formel I, b) 20 bis 70 Gew.-%, vorzugsweise 20 bis 65 Gew.-%, des Azofarbstoffs der Formel IIa und gegebenenfalls der Formel IIb sowie c) 1 bis 55 Gew.-%, vorzugsweise 5 bis 50 Gew.-%, mindestens eines Azofarbstoffs der Formel III oder IV, mit der Maßgabe, daß die Summe der unter a), b) und c) genannten Farbstoffe 100 Gew.-% ergibt.

Farbstoffmischungen für schwarze Farbtöne enthalten insbesondere, jeweils bezogen auf das Gesamtgewicht der Farbstoffe, a) 25 bis 45 Gew.-% mindestens eines Azofarbstoffs der Formel I, b) 15 bis 40 Gew.-% des Azofarbstoffs der Formel IIa und gegebenenfalls der Formel IIb sowie c) 30 bis 55 Gew.-% mindestens eines Azofarbstoffs der Formel III oder IV, mit der Maßgabe, daß die Summe der unter a), b) und c) genannten Farbstoffe 100 Gew.-% ergibt.

Farbstoffmischungen für marineblaue Farbtöne enthalten insbesondere, jeweils bezogen auf das Gewicht der Farbstoffe, a) 30 bis 40 Gew.-% mindestens eines Azofarbstoffs der Formel I, b) 35 bis 70 Gew.-% des Azofarbstoffs der Formel IIa und gegebenenfalls der Formel IIb sowie c) 2 bis 10 Gew.-% mindestens eines Azofarbstoffs der Formel III oder IV, mit der Maßgabe, daß die Summe der unter a), b) und c) genannten Farbstoffe 100 Gew.-% ergibt.

Bei den Farbstoffen der Formel I, IIa, IIb, III und IV handelt es sich im allgemeinen um bekannte Farbstoffe. Sie sind z.B. aus der DE-A-2 818 653, DE-A-3 112 427, EP-A-64 221 oder aus Venkataraman "The Chemistry of Synthetic Dyes", Vol. III, Seiten 444 bis 447, bekannt oder können nach den dort genannten Methoden erhalten werden.

Die Herstellung der erfindungsgemäßen Farbstoffmischungen erfolgt auf an sich bekanntem Weg, z.B. durch Mischen der jeweiligen Partner im genannten Gewichtsverhältnis. Gegebenenfalls können den neuen Mischungen weitere Komponenten, z.B. Dispergiermittel, wie Ligninsulfonate oder Sulfonierungsprodukte des Reaktionsprodukts von Formaldehyd mit Aromaten, oder andere Hilfsstoffe, zugesetzt werden. Es ist auch möglich, bereits fertige Farbstoffpräparationen der jeweiligen Partner oder fertige Farbstoffpräparationen mit reinen Farbstoffen abzumischen.

Demgemäß betrifft die vorliegende Erfindung weiterhin Farbstoffzubereitungen, enthaltend 15 bis 60 Gew.-%, bezogen auf das Gewicht der Farbstoffzubereitung, einer eingangs näher bezeichneten Farbstoffmischung sowie 40 bis 85 Gew.-%, bezogen auf das Gewicht der Farbstoffpräparation, Dispergiermittel.

Die neuen Farbstoffmischungen eignen sich zum Färben oder Bedrucken von Polyestern in textiler Form. Erfindungsgemäß sind darunter textile Formen, wie Fasern, Gewirke oder Gewebe aus Polyester oder Mischgewebe von Polyestern mit Baumwolle, Wolle, Celluloseacetat oder Triacetat zu verstehen. Man erhält Ausfärbungen oder Drucke in marineblauen bis schwarzen Farbtönen. Die Färbe- und Druckverfahren sind an sich bekannt. Nähere Einzelheiten können auch den Beispielen entnommen werden.

Die erfindungsgemäßen Farbstoffmischungen ergeben farbstarke Färbungen und verfügen über eine neutrale Abendfarbe. Außerdem weisen sie ausgezeichnete Produktionseigenschaften auf.

Die folgenden Beispiele sollen die Erfindung näher erläutern.

Färbevorschrift

10 g Polyestergewebe werden bei einer Temperatur von 50 °C in 200 ml einer Färbeflotte gegeben, die X Gew.-%, bezogen auf das Polyestergewebe, einer Farbstoffpräparation enthält und deren pH-Wert mittels Essigsäure auf 4,5 eingestellt ist. Man behandelt 5 Minuten bei 50 °C, steigert dann die Temperatur der Flotte innerhalb von 30 Minuten auf 130 °C, hält 60 Minuten bei dieser Temperatur und läßt dann innerhalb von 20 Minuten auf 60 °C abkühlen.

Danach wird das ausgefärbte Polyestergewebe reduktiv gereinigt, indem man es 15 Minuten in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 65 °C behandelt. Schließlich wird das Gewebe gespült, mit verdünnter Essigsäure neutralisiert, nochmals gespült und getrocknet.

Die obengenannte Farbstoffpräparation enthielt jeweils 40 Gew.-% an Farbstoffmischung sowie 60 Gew.-% eines Dispergiermittels auf Basis von Ligninsulfonat, jeweils bezogen auf das Gewicht der Präparation.

Die Farbstoffmischung setzte sich dabei wie in der folgenden Tabelle angegeben zusammen, wobei folgende Farbstoffe verwendet wurden.

Farbstoff 1

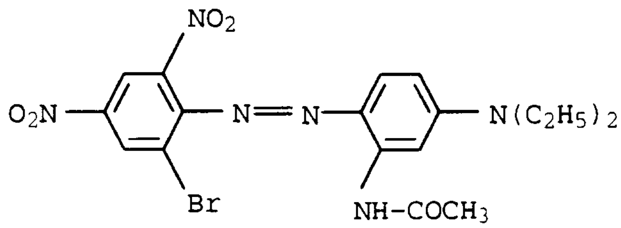

Farbstoff 2

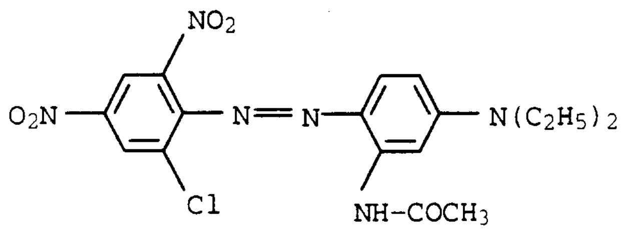

Farbstoff 3

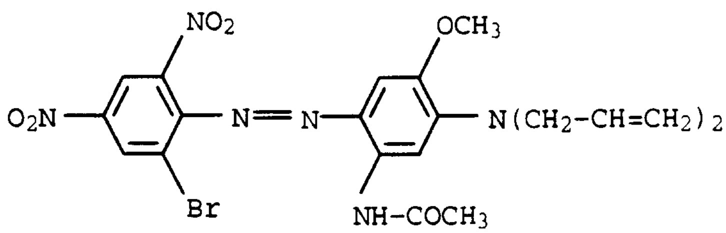

Farbstoff 4

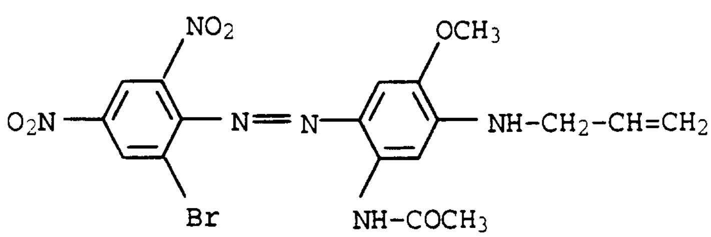

Farbstoff 5

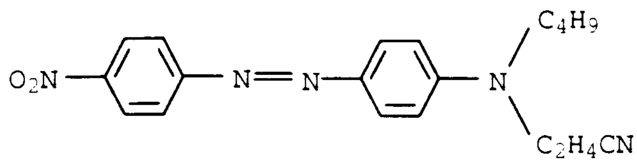

Farbstoff 6

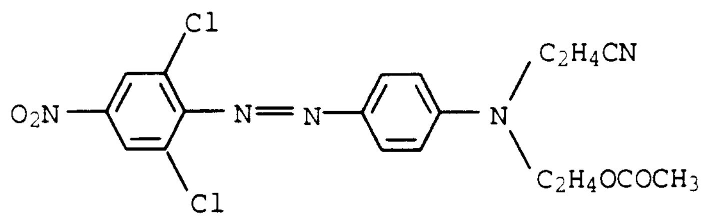

Farbstoff 7

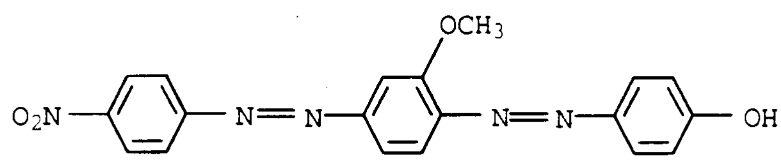

| Bsp. Nr. | Farbstoff Nr. | | | | | | | angewandte Menge an Farbstoffpräparation (X) |
|---|---|---|---|---|---|---|---|---|
| | 1 | 2 | 3 | 4 | 5 | 6 | 7 | |
| | | [Gew.-%, bezogen auf das Gewicht der Farbstoffmischung] | | | | | | |
| 1 | 35 | 0 | 58 | 0 | 0 | 0 | 7 | 1,5 |
| 2 | 0 | 33 | 60 | 0 | 0 | 0 | 7 | 1,6 |
| 3 | 30 | 0 | 60 | 10 | 10 | 0 | 0 | 1,5 |
| 4 | 30 | 0 | 60 | 0 | 0 | 10 | 0 | 1,6 |
| 5 | 30 | 0 | 40 | 15 | 0 | 10 | 7 | 1,4 |
| 6 | 29 | 0 | 25 | 0 | 0 | 0 | 46 | 2,4 |
| 7 | 0 | 27 | 26 | 0 | 0 | 0 | 47 | 2,5 |
| 8 | 20 | 0 | 25 | 0 | 55 | 0 | 0 | 2,5 |
| 9 | 20 | 0 | 25 | 0 | 0 | 55 | 0 | 2,6 |
| 10 | 25 | 0 | 15 | 10 | 0 | 0 | 45 | 2,3 |

Mit den Mischungen der Beispiele 1 bis 5 erhielt man jeweils farbstarke marineblaue Färbungen, mit denen der Beispiele 6 bis 10 jeweils farbstarke schwarze Färbungen.

**Patentansprüche**

**1.** Farbstoffmischungen, enthaltend, jeweils bezogen auf das Gesamtgewicht der Farbstoffe,

a) 25 bis 45 Gew.-% mindestens eines Azofarbstoffs der Formel I

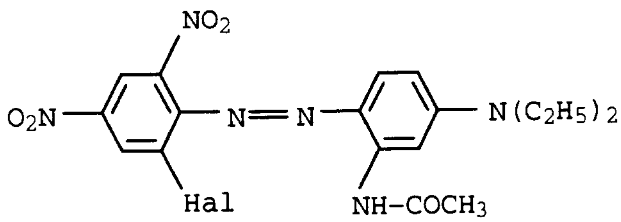

(I),

in der Hal Chlor oder Brom bedeutet,
b) 20 bis 70 Gew.-% des Azofarbstoffs der Formel IIa

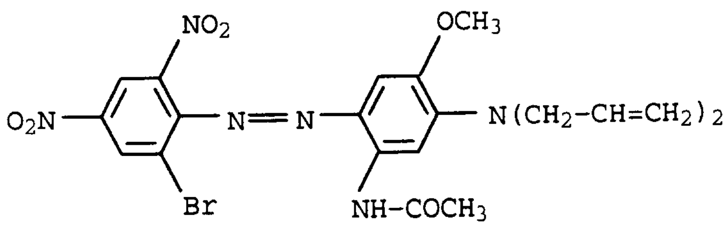

(IIa)

und gegebenenfalls des Farbstoffs oder Formel IIb

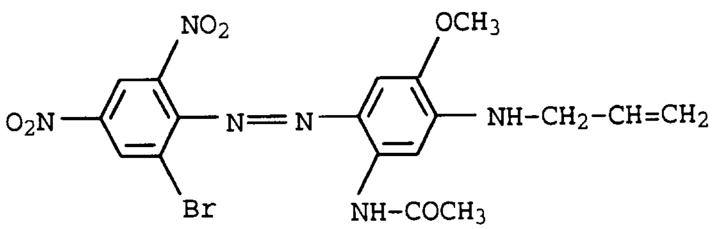

(IIb),

wobei der Anteil an Farbstoff IIa 50 bis 100 Gew.-% und an Farbstoff IIb 0 bis 50 Gew.-% beträgt, jeweils bezogen auf das Gewicht an Farbstoff IIa oder IIb,
sowie
c) 1 bis 55 Gew.-% mindestens eines Azofarbstoffs der Formel III oder IV

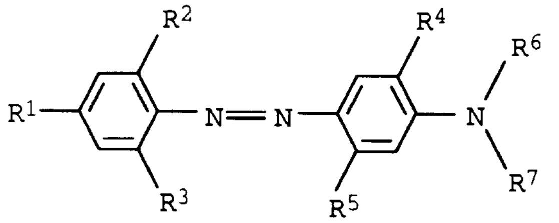

(III)

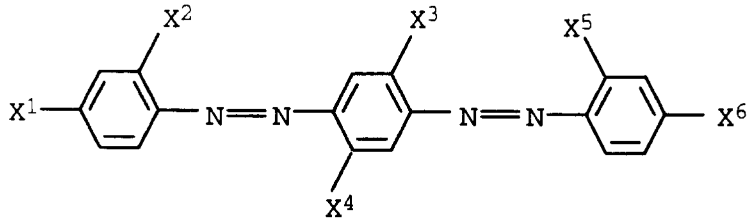

(IV),

worin

| | |
|---|---|
| $R^1$ | Nitro oder $C_1$-$C_4$-Alkylsulfonyl, das gegebenenfalls durch Hydroxy substituiert ist, |
| $R^2$ | Brom, |
| $R^3$ | Wasserstoff oder Brom oder $R^2$ und $R^3$ auch unabhängig voneinander jeweils Wasserstoff oder Chlor, |
| $R^4$ und $R^5$ | unabhängig voneinander jeweils Wasserstoff oder Chlor, |
| $R^6$ und $R^7$ | unabhängig voneinander jeweils Wasserstoff, Phenyl oder $C_1$-$C_4$-Alkyl, das gegebenenfalls durch Hydroxy, Phenoxy, 2-Cyanoethoxy, Acetyloxy, Phenoxyacetyloxy, Benzoyloxy, Methoxycarbonyloxy oder Phenylaminocarbonyloxy substituiert ist, oder, wenn $R^2$ und $R^3$ jeweils für Wasserstoff oder Chlor stehen, auch $C_1$-$C_4$-Cyanoalkyl, |
| $X^1$ | Wasserstoff, Hydroxy, Methoxy, Acetylamino oder Nitro, |
| $X^2$, $X^3$, $X^4$ und $X^5$ | unabhängig voneinander jeweils Wasserstoff, Methyl oder Methoxy und |
| $X^5$ | Hydroxy, 2-Hydroxyethoxy, Formyl oder Methoxycarbonylamino bedeuten, |

mit der Maßgabe, daß die Summe der unter a), b) und c) genannten Farbstoffe 100 Gew.-% ergibt.

2. Farbstoffmischungen nach Anspruch 1, enthaltend mindestens einen Azofarbstoff der Formel III oder IV, worin

| | |
|---|---|
| $R^1$ | Nitro, |
| $R^2$ | und $R^3$ jeweils Wasserstoff oder jeweils Chlor, |
| $R^4$ | Wasserstoff, Chlor oder Methyl, |
| $R^5$ | Wasserstoff und |
| $R^6$ und $R^7$ | unabhängig voneinander Wasserstoff, Phenyl, $C_1$-$C_4$-Alkyl oder durch Hydroxy, Phenoxy, 2-Cyanoethoxy, Acetyloxy, Phenoxyacetyloxy, Benzoyloxy, Methoxycarbonyloxy, Phenylaminocarbonyloxy oder Cyano substituiertes Ethyl |

bedeuten und $X^1$, $X^2$, $X^3$, $X^4$, $X^5$ und $X^5$ jeweils die in Anspruch 1 genannte Bedeutung besitzen.

3. Farbstoffzubereitungen, enthaltend 15 bis 60 Gew.-%, bezogen auf das Gewicht der Farbstoffzubereitung, einer Farbstoffmischung gemäß Anspruch 1 sowie 40 bis 85 Gew.-%, bezogen auf das Gewicht der Farbstoffzubereitungen, Dispergiermittel.

4. Verwendung der Farbstoffmischungen gemäß Anspruch 1 zum Färben oder Bedrucken von Polyestern in textiler Form.